(19) Europäisches Patentamt
European Patent Office
Office européen des brevets

(11) Publication number: **0 283 743 B1**

(12) # EUROPEAN PATENT SPECIFICATION

(45) Date of publication of patent specification: **21.07.93** (51) Int. Cl.$^5$: **G10L 5/06**

(21) Application number: **88102646.2**

(22) Date of filing: **23.02.88**

(54) **Pattern recognition apparatus.**

(30) Priority: **23.02.87 JP 37787/87**

(43) Date of publication of application:
**28.09.88 Bulletin 88/39**

(45) Publication of the grant of the patent:
**21.07.93 Bulletin 93/29**

(84) Designated Contracting States:
**DE FR GB**

(56) References cited:
**EP-A- 0 035 761**
**US-A- 3 710 323**
**US-A- 3 943 295**

**PROCEEDINGS OF THE NATIONAL ELECTRONICS CONFERENCE, Vol. 34, October 1980, pages 346-350, Brook, Illinois, US; M.F. DAPRON et al.: "A system for voiced input of laboratory data"**

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Tsunoda, Jun c/o Patent Division**
**Kabushiki Kaisha Toshiba 1-1 Shibaura**
**1-chome**
**Minato-ku Tokyo 105(JP)**

(74) Representative: **Henkel, Feiler, Hänzel & Partner**
**Möhlstrasse 37**
**W-8000 München 80 (DE)**

EP 0 283 743 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a pattern recognition apparatus for recognizing an input signal and, more particularly, to a pattern recognition apparatus suitable for implementation as an integrated circuit.

Fig. 1 is a block diagram showing a conventional arrangement of a speech recognition apparatus as one type of pattern recognition apparatuses. A voice signal input by a voice signal input means such as microphone 10 is supplied to acoustic analysis section 11. In section 11, voice features such as frequency spectra are analyzed in units of predetermined frame lengths (normally, several ms to several tens of ms), and feature data is time-serially extracted. After or while the time-series data is stored in memory device 12, a word boundary, i.e., start and end points of an effective voice are detected by word boundary detection section 13. The start and end points of the effective word detected by section 13 are supplied to address table 14 of memory device 12. Based on an output address from the address table 14, a data string in a specific voiced period or in a word boundaries is fetched from memory device 12 as recognition data, and is supplied to similarity computing section 15.

Reference pattern memory device 16 stores a large number of reference pattern data. Similarity computing section 15 performs similarity computation between these reference pattern data and the data strings fetched from memory device 12. The computation result is supplied to determining section 17, and voice data corresponding to the reference pattern having the maximum similarity is output as a recognition result.

A word period duration when the reference pattern data is stored in memory device 16 does not often coincide with an input word period duration to be recognized. For this reason, when data to be recognized is fetched from memory device 12, the fetched data is time-serially normalized in correspondence with the duration of the reference pattern data, and then, the similarity computation must be performed.

The prior art document by M.F. Dapron et al.: "A system for voiced input of laboratory data" in "Proceedings of the National Electronics Conference", Vol. 34, Oct. 1980, pages 346 to 350, Brook, Illinois, US;, discloses a speaker-dependent isolated-word recognition system, designed to give near real-time response to voiced numerical data entry. Recognition is based upon a simple sum-of-differences algorithm that finds the best match between the user input and a set of vocabulary template patterns created during a user training session. The system itself can be broken into a feature extractor and a pattern processor. The feature extractor separates the speech input into eight parameters: six spectral band energies, total energy and zero-crossings. These parameters are sequentially sampled and stored by a microcomputer that is used as the pattern processor.

Further, in this known system time normalization is used because people do not time their pronunciations of a word consistently. To remove these time variations, the system extracts 16 evenly spaced samples from the stored speech data. The spacing is calculated by dividing the number of input samples by 16 and then using the quotient as an index increment. If the number of samples is not a multiple of 16, then the index increment is increased by one during the first skips, where r is the remainder resulting from this division. After time normalization has been completed a 128-byte array pattern of 16 samples by 8 bands is left. This normalized input is then either stored in a template area or it is compared with each template in the vocabulary to find the closest match; in other words, the recognizer is supplied with a single arbitrary representation of the word to be recognized, so that word boundary detection errors may arise.

Finally, prior art document US-A-3 943 295 discloses an apparatus and method for recognizing words from among continuous speech; this known apparatus comprises a plurality of modules, one module for each of the vocabulary words of the system. Each module comprises a sequential logic circuitry in conjunction with count storage registers and comparators. In such continuous speech processing a parallel processing is, of course, needed, since a continuous speech should be cut before performing processing operations.

Various time-series normalizing methods of input pattern data have been proposed. However, these methods must use complicated apparatuses, and a high recognition accuracy cannot be obtained.

It is an object of the present invention to provide a pattern recognition apparatus which can easily time-serially normalize input pattern data with a relatively simple arrangement, and can realize a high recognition accuracy.

To solve this object the present invention provides a pattern recognition apparatus as specified in claim 1 or 8.

In the pattern recognition apparatus of the present invention, the second memory section which can be accessed by only the recognition computing section is prepared, and data to be recognized fetched by the data fetch section is time-serially normalized and stored in the second memory section. The feature data obtained from the input signal is stored in the first memory section. Therefore, the first memory section can be accessed independently of the recognition computation.

This invention can be more fully understood from the following detailed description when taken in conjunction with the accompanying drawings, in which:

Fig. 1 is a block diagram showing an arrangement of a conventional speech recognition apparatus;

Fig. 2 is a block diagram showing functions of a pattern recognition apparatus according to a first embodiment of the present invention;

Fig. 3 is a block diagram showing the arrangement of the embodiment shown in Fig. 2;

Figs. 4 and 5 are graphs showing functions of a filter bank in an acoustic analysis section shown in Fig. 3;

Fig. 6 shows a data format in one frame;

Fig. 7 shows a data format in a first memory device;

Fig. 8 shows a data format in a second memory device;

Figs. 9 to 12 are flow charts showing the operation of the embodiment shown in Fig. 3;

Fig. 13 is a block diagram showing an arrangement according to a second embodiment of the present invention; and

Fig. 14 is a block diagram showing an arrangement according to a third embodiment of the present invention.

Embodiments of the present invention will be described with reference to the accompanying drawings.

Fig. 2 is a view for explaining functions of an embodiment of a speech recognition apparatus to which the present invention is applied. In Fig. 2, an analog voice signal input from microphone 20 is supplied to acoustic analysis section 21. Acoustic analysis section 21 extracts digital feature data from the input voice signal using a combination of a filter bank including a serially connected rectifier, an analog band-pass filter and a low-pass filter and an analog-to-digital (A/D) converter for converting the output from the filter bank into digital data. A word boundary of a input speech period is detected from the extracted feature data by word boundary detection section 22 and is stored in first memory device 23.

As one detection method in word boundary detection section 22, the following method is known. Energy components of input voice data are extracted by acoustic analysis section 21 using a broad-band band-pass filter. When the energy components exceed a predetermined threshold value for a predetermined period of time, a position where the energy components first exceed the threshold value is determined as a start point or a start frame. When the energy components are decreased below the threshold value for a predetermined period of time, a position where the energy components are first decreased below the threshold value is determined as an end point or an end frame of a word. In another detection method, high and low threshold values are determined, and when energy components reach the high threshold value from the low threshold value within a predetermined period of time, the frame corresponding to the low threshold value is determined as a start frame of a word.

The feature data of input voice data obtained by detecting the word boundary is normally time-serially sampled at a given sampling frequency. Assuming that the number of samples is given by N frames, N changes depending on the word boundary. The N frame data is normalized along with the time base to obtain M frame data having a fixed duration. As one method, re-sampling is performed. For example, a sample of the $(1+i(N-1)/(M-1))$th frame is fetched (where $i = 0$ to $M-1$). The feature data stored in first memory device 23 is re-sampled by re-sampling section 24, and is normalized along the time base. Then, the normalized data is transferred to second memory device 25 and is stored therein.

The data string stored in second memory device 25 is fetched as data to be recognized, and is supplied to similarity computing section 26. The similarity computation can be executed by a known method disclosed in such as U.S. Patent No. 4,624,011.

Reference pattern memory device 27 stores a large number of reference pattern data. Similarity computing section 26 performs the similarity computation between these reference pattern data and the data string fetched from second memory device 25. The computation result or similarity data is supplied to determining section 28, and a word number corresponding to the reference pattern having the maximum similarity is determined. The determined number is output as a recognition result.

In the apparatus of this embodiment, second memory device 25 separate from the first memory device for storing data to be recognized is accessed to read out data for similarity computation. Therefore, no complicated address computation is required, and data can be fetched only by sequentially addressing second memory device 25. When similarity computing section 26 accesses data to be recognized, only a read control signal and an address count-up signal are required. For this reason, the arrangement of a control circuit can be simplified, and the number of hardware components for an integrated circuit can be reduced.

The re-sampled data stored in second memory device 25 requires a capacity 1/10 or less the feature data stored in first memory device 23. For this reason, only one first memory device 23 need to be prepared even when a plurality of similarity computing sections are required in the case wherein word boundary detection is performed based on a plurality of algorithms in order to detect a plurality of word boundaries or wherein a plurality of periods are detected to obtain a plurality of candidates based on a specific algorithm.

In practice, in view of an occupation area on a chip when the apparatus of this embodiment is integrated on the chip, the area of second memory device 25 is 0.1 and that of similarity computing section 26 is 0.3 when the area of first memory device 23 is assumed to be 1. Therefore, even when a plurality of similarity computing sections must be prepared on the chip, only one first memory device 23 which occupies a large area need be prepared, thus advantageously reducing a chip area.

Fig. 3 is a block diagram showing an arrangement of the apparatus of this embodiment for realizing the functions shown in Fig. 2.

The same reference numerals in Fig. 3 denote the corresponding portions as in Fig. 2. Acoustic analysis section 21 may be constituted by an analog processor for analyzing frequency components, energy components, and so forth in a voice signal input through microphone 20. Analog processor 21 incorporates a filter bank 21A and A/D converter 21B, and extracts predetermined acoustic features from the input voice signal upon instruction from CPU 30 through bus B.

Reference numeral 31 denotes a digital processor which incorporates first memory device 23, recognition computing section 32, and external interface section (I/F) 33.

Recognition computing section 32 incorporates similarity computing section 26, second memory device 25, and reference pattern memory device 27. Of the functions shown in Fig. 2, those corresponding to word boundary detecting section 22, re-sampling section 24, and determining section 28 are realized by CPU 30.

Filter bank 21A in acoustic analysis section 21 comprises 7-channel band-pass filters. The band-pass filter rectifiers and low-pass filters has characteristics shown in Figs. 4 and 5. The rectifier rectifies outputs of the band-pass filter and delivers the rectified signal to the succeeding low-pass filter which allows a signal of less than 50 Hz to pass therethrough. Frequency components included in a human voice are extracted using 6-channel (CH1 to CH6) band-pass filters, as shown in Fig. 4, and the extracted data is used for the similarity computation as input voice feature data. The 7th band-pass filter passes a signal having a main frequency range, e.g., 50 Hz to 5,000 Hz included in the human voice. An output extracted by the 7th- channel (CH7) band-pass filter is used for detecting energy components of input voice data at word boundary detection section 22 shown in Fig. 2.

The 1st- to 7th-channel filter outputs extracted by filter bank 21A are supplied to A/D converter 21B, and are subjected to non-linear conversion such as log-conversion. Thereafter, the resultant data is output as 8-bit digital feature data for each channel. 1-byte dummy data is added to 7-channel 8-bit feature data (8 (bit) $\times$ 7 (channel)), and the resultant 8-byte data is treated as one-frame data.

Each frame data output from acoustic analysis section 21 is sampled by CPU 30 every 20 ms, and is sequentially stored in first memory device 23 through bus B. Fig. 6 shows the 8-byte data format for one frame. Such frame data is stored in first memory device 23 having a memory capacity corresponding to a maximum of 100 frames, as shown in Fig. 7. Storage data shown in Fig. 7 represents a state after word boundary detection. The first frame serves as voice start data point, and the 80th frame serves as voice end data. First memory device 23 has a ring structure, and the address order of the start and end points is often reversed. In the case of fig. 7, the 69th frame indicated by * is followed by the 70th frame indicated by **. For this reason, theoretically, data of start to end frames can be treated as continuous data.

The number of frames of the feature data stored in first memory device 23 varies depending on a duration of voice data. The frame data included in one word period in first memory device 23 is read out in a predetermined cycle (sampling frequency) under the control of CPU 30, and is sequentially stored in 60-byte second memory device 25 from the first frame. In this case, of the frame data, 6-byte data (CH1 to CH6 data) is stored in second memory device 25 as feature data for the similarity computation. Memory device 25 always stores 60-byte data, and performs normalization along the time base.

The operation of the embodiment shown in Fig. 3 will be described with reference to the flow charts shown in Figs. 9 to 12.

With the above arrangement, CPU 30 causes first memory device 23 in digital processor 31 to store feature data obtained by analog processor 21, in step A1 shown in Fig. 9. CPU 30 also performs word boundary detection control using energy data of CH7 shown in Fig. 5, in step A2. For example, CPU 30 compares the output level of the CH7 band-pass filter with a predetermined value, and detects a word boundary defined by start and end points obtained when the output level exceeds or is decreased below the predetermined value. After voice input is completed, YES is obtained in step A3, and re-sampling control is performed in step A4. CPU 30 transfers re-sampled data to second memory device 25.

CPU 30 supplies a computation start instruction to recognition computing section 32 of digital processor 31. Recognition computing section 32 performs a similarity computation for all the voice patterns, e.g., syllable patterns stored in reference pattern memory device 27 using similarity computing section 26, in step A5. Each time a computation for each word is completed, section 32 supplies a read request signal to CPU 30 in step A6 so as to request CPU 30 to read out the similarity computation results.

When CPU 30 fetches similarity computation results for all the words, CPU 30 sends out the word number having the maximum similarity to an external host system through external interface section 33.

The word boundary detection process (A2) shown in Fig. 9 will be described with reference to Fig. 10. Referring to Fig. 10, it is checked in step B1 if a start candidate is already found. If NO in step B1, the flow advances to step B2 to check if a voice detection (energy) level from the band-pass filter CH7 having characteristics shown in Fig. 5 is larger than predetermined value X. If YES in step B2, the flow advances to step B3, and a flag indicating that the start candidate is found is set.

The flow advances to step B4 to check if the start candidate obtained in step B3 is determined as a start. If NO in step B4, the flow advances to step B5 to check if the energy level is larger than predetermined value X in the same manner as in step B2. If YES in step B5, the flow advances to step B6 to check if Z or more frames (e.g., Z = 5) having energy level larger than are continued. If YES in step B6, a flag indicating that the start is determined is set in step B7. If it is determined in step B5 that the energy level is smaller than X, the flow advances to step B8, and the start candidate is canceled.

If the start is determined in step B7, the flow advances from step B4 to B9 to find an end candidate. If NO in step B9, it is checked in step B10 if the obtained energy level is smaller than predetermined value Y (X = Y is allowable). If YES in step B10, the flow advances to step B11. In step B11, a flag indicating that the end candidate is found is set.

If the end candidate is found, the flow advances from step B9 to B12 to check if the end is determined. If NO in step B12, it is checked in step B13 if the energy level is lower than Y (X = Y is also allowable). If YES in step B13, the flow advances to step B14. It is checked in step B14 if V frames (e.g., V = 10) having a level lower than Y are continued. If YES in step B14, the flow advances to step B15 and an end of the input word boundary is determined. If it is determined in step B13 that the energy level is larger than Y, the flow advances to step B16, and the end candidate is canceled.

If the end is determined in step B15, YES is obtained in step B12, and the flow is ended.

Re-sampling step A4 in Fig. 9 will be described in more detail with reference to Fig. 11. In step C1, word boundary period $\ell$ is obtained by performing a computation $\ell$ = voice end frame - voice start frame. Resultant voiced period $\ell$ is divided into 10 sections in step C2, and value $\ell/10$ is obtained as re-sample width d. In step C3, i = 0 is written in the content of a counter.

In step C4, feature data of an (i.d)th frame (i = 1) from the frame number of the start is read out from first memory device 23, and is stored in second memory device 25. The flow advances to step C5, and value i is incremented by +1. The incremented value is written in an i register. It is checked in step C6 if i is smaller than 10. If YES in step C6, the flow returns to step C4, and feature of next frame is stored in second memory device 25. Similarly, the frame data is sequentially stored in second memory device 25. When i = 10, NO is obtained in step C6, and re-sampling is ended.

Fig. 12 is a flow chart showing the content of sorting step A6 in Fig. 9 in detail. In step D1, 0 is set as a maximum similarity for a word to be recognized, and number "1" of the reference word pattern is set. Computing section 26 executes similarity computation of pattern data read out from second memory device 25 and reference pattern memory device 27 under the control of CPU 30. In step D2, CPU 30 fetches the resultant similarities. The computed similarity is compared with preset maximum value in step D3. If the computed similarity is larger than a reset maximum value, NO is obtained in step D3, and the flow advances to step D4. The similarity larger than the preset maximum value is fetched as the latest maximum value, and the corresponding word number is stored in CPU 30, as a recognition result.

In step D5, a word number is incremented by +1, and it is then checked in step D6 if the operations in steps D2 to D5 are completed for all the reference words. Therefore, when the operation shown in Fig. 12 is completed for all the words, the word number providing the maximum similarity is output as recognition results from I/F 33.

More specifically, in the apparatus of this embodiment, CPU 30 serves as both a control circuit for controlling the entire operation, and determining section 28 in Fig. 2.

Fig. 13 is a block diagram showing an arrangement of an apparatus according to a second embodiment of the present invention.

In this second embodiment, the present invention is applied to a speech recognition apparatus having two recognition computing sections. Reference numeral 21 denotes an analog processor, incorporating a filter bank and an A/D converter, for analyzing a voice signal input by a voice signal input means such as microphone 20. Reference numeral 30 denotes a CPU; 23, a first memory device; 26A and 26B, similarity computing sections; 25A and 25B, second memory devices; 27A and 27B, reference pattern memory devices; and 33, an external interface section.

CPU 30 selects a plurality of (in this case, two) start and end points when a word boundary period is detected from feature data stored in first memory device 23, and re-samples and transfers the data to second memory devices 25A and 25B. After the transfer operation is completed, CPU 30 supplies a recognition computation start instruction to similarity computing sections 26A and 26B, and then stands by until a computation for one word is completed. The similarity computation for one word is normally completed in about 3 ms. However, since the instruction execution speed of CPU 30 is fast, i.e., 2 $\mu$s, the similarity computations are parallelly performed in two similarity computing sections 26A and 26B, and all the data can be processed without losing a computation result.

When reference pattern memory devices 27A and 27B store the identical content, the maximum one of a plurality of similarity computation results obtained for a plurality of word boundaries is determined to be a similarity for a word. Therefore, a word boundary detection error is eliminated, and a high recognition accuracy is obtained.

When reference pattern memory devices 27A and 27B store different contents, reference pattern data number is doubled as compared to a case wherein only one reference pattern memory device is provided, and a similarity of an input voice signal having a large number of vocabulary can be obtained at a speed twice that of the apparatus shown in Fig. 3.

In the apparatus of this embodiment, the similarity computation is performed in two similarity computing sections 26A and 26B. Three or more similarity computing sections can be prepared to obtain higher recognition efficiency or to obtain a similarity at high speed.

Fig. 14 is a block diagram showing an arrangement of an apparatus according to a third embodiment of the present invention.

In the apparatus of this embodiment, when two similarity computing sections 26A and 26B are provided, one reference pattern memory device 27 is provided, and is commonly used by different similarity computing sections. In this embodiment, input voices having a larger number of vocabulary cannot be recognized at high speed. However, word boundary detection precision can be improved with a small number of hardware components, and a high recognition efficiency can be obtained.

According to the present invention as described above, a pattern recognition apparatus which can provide a high recognition efficiency and can be constituted with a smaller number of hardware components can be provided.

## Claims

**1.** A pattern recognition apparatus comprising:

means (21) for extracting pattern feature data representing a pattern feature of an input signal including durations denoting effective signal periods;

first memory means (23) for storing the extracted pattern feature data;

means (24, 30) for resampling defined pattern feature data included in the pattern feature data stored in said first memory means (23), said resampling means (24, 30) including means for defining a plurality of durations denoting a plurality of different effective signal periods of the pattern feature data stored in said first memory means (23);

second memory means (25) having a plurality of memory units (25A, 25B) for storing the defined pattern feature data read out by said resampling means (24, 30);

means (27) for storing reference pattern data;

similarity computing means (26) including similarity computing sections (26A, 26B) corresponding in number to said plurality of memory units (25A, 25B), each of said computing sections computing similarities between the defined pattern feature data read out from said second memory means (25) and said reference pattern data read out from said reference pattern data storing means; and

means (28) for determining the pattern feature of the input signal based on the computed similarities.

**2.** An apparatus according to claim 1, characterized in that:

said pattern feature data extracting means (21) includes first filter means (21A) for extracting frequency spectrum data of the input signal and second filter means (21A) for extracting energy level data of the input signal;

said first memory means (23) stores the frequency spectrum data from said first filter means (21A); and

said resampling means (24, 30) includes means for determining the different effective signal periods in accordance with the energy level data from said second filter means (21A).

**3.** An apparatus according to claim 2, characterized in that:

the input signal is a voice signal;

the reference pattern data represent a plurality of reference voice patterns; and

said pattern determining means includes means for determining the input voice signal based on the computed similarities.

**4.** An apparatus according to claim 1, characterized in that said pattern feature data extracting means (21) includes:

a filter bank (21A) for filtering, using a plurality of frequency channels, said sampled input signal obtained by sampling the input signal in the predetermined frame cycle; and

means (21B) for analog-to-digital converting the output from said filter bank (21A) and forming frame data.

**5.** An apparatus according to claim 1, characterized in that first memory means (23) has a ring structure.

**6.** An apparatus according to claim 1, characterized in that the reference pattern data is output from a plurality of reference pattern memories (27A, 27B) provided in correspondence with said plurality of similarity computing sections (26A, 26B).

**7.** An apparatus according to claim 1, characterized in that the reference pattern data is output from a single reference pattern memory (27) commonly to said plurality of memory units.

**8.** A pattern recognition apparatus for determining a pattern of an input signal, said apparatus comprising:

extracting means (21) for extracting pattern feature data representative of the pattern from the input signal;

first memory means (23) operatively coupled to the extracting means (21) for storing the extracted pattern feature data;

candidate selection means (30) operatively coupled to the first memory means (23) for selecting a plurality of candidate pattern feature data corresponding to a plurality of durations of the extracted pattern feature data, each of the candidate pattern feature data being resampled to have a selected unique duration;

second memory means (25) operatively coupled to the candidate selection means (30) for storing the plurality of candidate pattern feature data and reference pattern data;

similarity computing means (26) operatively coupled to the second memory means (25) for computing similarities between the candidate pattern feature data and the reference pattern data; and

determining means operatively coupled to the similarity computing means (26) for determining the pattern of the input signal based on the computed similarity.

**9.** An apparatus according to claim 8, characterized in that:

the input signal includes frequency spectrum data and energy level data;

said extracting means (21) includes first filter means (21A) for extracting the frequency spectrum data and second filter means (21A) for extracting the energy level data;

said first memory means (23) stores the frequency spectrum data; and

said candidate selection means includes means for determining the durations for the candidate pattern feature data in accordance with the energy level data.

**10.** An apparatus according to claim 9, characterized in that:

the input signal comprises a voice signal having a voice pattern;

the reference pattern data represent a plurality of reference voice patterns; and

said determining means includes means for matching the voice pattern to a selected one of the reference voice patterns based on the computed similarity.

**11.** An apparatus according to claim 8, characterized in that said extracting means (21) includes:

a filter bank (21A) including a plurality of frequency channels for filtering and sampling the input signal in a predetermined frame cycle to generate a filtered input signal; and

analog-to-digital converting means (21B) operatively coupled to the filter bank (21A) for digitizing the filtered input signal to form frame data.

**12.** An apparatus according to claim 8, characterized in that said first memory means (23) has a ring structure.

**13.** An apparatus according to claim 8, characterized in that:

said second memory means (25) includes a plurality of memory units (25A, 25B), each of the memory units (25A, 25B) storing selected frame data of the candidate pattern feature data; and

said similarity computing means (26) includes a plurality of similarity computing sections (26A, 26B) operatively coupled to respective and corresponding ones of said memory units (25A, 25B), each of said similarity computing sections (26A, 26B) computing a similarity between the frame data of the candidate pattern feature data of a corresponding memory unit and the reference pattern data.

**14.** An apparatus according to claim 13, characterized in that the second memory means (25) includes a plurality of reference pattern memories (27A, 27B) operatively coupled to respective and corresponding ones of said similarity computing sections (26A, 26B), each of said similarity computing sections (26A, 26B) computing a similarity between the frame data of the candidate feature data of a corresponding memory unit (25A, 25B) and the reference pattern data of a corresponding reference pattern memory.

**15.** An apparatus according to claim 13, characterized in that said second memory means (25) further includes a single reference pattern memory (27) operatively coupled to said memory units for storing the reference pattern data and communicating the reference pattern data to the memory units.

## Patentansprüche

**1.** Anordnung zur Mustererkennung mit:

einer Einrichtung (21) zum Extrahieren von Mustermerkmalsdaten, die ein Mustermerkmal eines Eingangssignals repräsentieren, welches Zeitdauern beinhaltet, die effektive Signalperioden bezeichnen;

einer ersten Speichereinrichtung (23) zum Speichern der extrahierten Mustermerkmalsdaten;

einer Einrichtung (24, 30) zum Wiederabtasten definierter Mustermerkmalsdaten, welche in den Mustermerkmalsdaten beinhaltet sind, die in der ersten Speichereinrichtung (23) gespeichert sind, wobei die wiederabtastende Einrichtung (24, 30) eine Einrichtung zum Definieren einer Vielzahl von Zeitdauern beinhaltet, die eine Vielzahl von verschiedenen effektiven Signalperioden der Mustermerkmalsdaten bezeichnen, die in der ersten Speichereinrichtung (23) gespeichert sind;

einer zweiten Speichereinrichtung (25), die eine Vielzahl von Speichereinheiten (25A, 25B) zum Speichern der definierten Bildmusterdaten besitzt, die durch die wiederabtastende Einrichtung (24, 30) ausgelesen werden;

einer Einrichtung (27) zum Speichern von Referenzmusterdaten;

einer ähnlichkeitsberechnenden Einrichtung (26), die ähnlichkeitsberechnende Abschnitte (26A, 26B) beinhaltet, die in der Anzahl der Vielzahl von Speichereinheiten (25A, 25B) entsprechen, wobei jede der berechnenden Abschnitte Ähnlichkeiten zwischen den definierten Mustermerkmalsdaten, die von der zweiten Speichereinrichtung (25) ausgelesen werden, und den Referenzmusterdaten, die von der Referenzmusterdaten speichernden Einrichtung ausgelesen werden, berechnet; und

einer Einrichtung (28) zum Bestimmen der Mustermerkmale der Eingangssignale, welche auf den berechneten Ähnlichkeiten basieren.

**2.** Anordnung entsprechend Anspruch 1, dadurch gekennzeichnet, daß:

die Mustermerkmalsdaten extrahierende Einrichtung (21) eine erste Filtereinrichtung (21A) zum Extrahieren der Frequenzspektrumsdaten des Eingangssignals und eine zweite Filtereinrichtung (21A) zum Extrahieren von Energiepegeldaten des Eingangssignals beinhaltet;

die erste Speichereinrichtung (23) die Frequenzspektrumsdaten der ersten Filtereinrichtung (21A) speichert; und

die wiederholt abtastende Einrichtung (24, 30) eine Einrichtung zum Bestimmen der verschiedenen effektiven Signalperioden entsprechend den Energiepegeldaten von der zweiten Filtereinrichtung (21A) beinhaltet.

**3.** Anordnung nach Anspruch 2, dadurch gekennzeichnet, daß:

das Eingangssignal ein Sprachsignal ist;

die Referenzmusterdaten eine Vielzahl von Referenzsprachmustern repräsentieren; und

die Muster bestimmende Einrichtung eine Einrichtung zum Bestimmen des Eingangssprachsignals beinhaltet, welches auf den berechneten Ähnlichkeiten basiert.

**4.** Anordnung nach Anspruch 1, dadurch gekennzeichnet, daß die Mustermerkmalsdaten extrahierende Einrichtung (21) beinhaltet:

eine Filterbank (21A) zum Filtern, wobei eine Vielzahl von Frequenzkanälen verwendet wird, des abgetasteten Eingangssignals, welches durch das Abtasten des Eingangssignals in dem vorbestimmten Rahmenzyklus erhalten wird; und

eine Einrichtung (21B) zum Analog/Digital-Umsetzen des Ausgangssignals von der Filterbank (21A) und zum Bilden der Rahmendaten.

**5.** Anordnung nach Anspruch 1, dadurch gekennzeichnet, daß die erste Speichereinrichtung (23) eine Ringstruktur besitzt.

**6.** Anordnung nach Anspruch 1, dadurch gekennzeichnet, daß die Referenzmusterdaten von einer Vielzahl von Referenzmusterspeichern (27A, 27B) ausgegeben werden, die entsprechend der Vielzahl von ähnlichkeitsberechneten Abschnitten (26A, 26B) bereitgestellt sind.

**7.** Anordnung nach Anspruch 1, dadurch gekennzeichnet, daß die Referenzmusterdaten von einem einzelnen Referenzmusterspeicher (27) ausgegeben werden, der der Vielzahl der Speichereinheiten gemeinsam zur Verfügung steht.

**8.** Anordnung zur Mustererkennung zum Bestimmen eines Musters eines Eingangssignals, mit:

einer extrahierenden Einrichtung (21) zum Extrahieren von Mustermerkmalsdaten, die repräsentativ für die Muster von dem Eingangssignal sind;

einer ersten Speichereinrichtung (23), die im Betrieb mit der extrahierenden Einrichtung (21) zum Speichern der extrahierenden Mustermerkmalsdaten gekoppelt ist;

einer potentiell verwendbaren Auswähleinrichtung (30), die im Betrieb mit der ersten Speichereinrichtung (23) zum Auswählen einer Vielzahl von potentiell verwendbaren Mustermerkmalsdaten entsprechend einer Vielzahl von Zeitdauern der extrahierten Mustermerkmalsdaten gekoppelt ist, wobei jede der potentiell verwendbaren Mustermerkmalsdaten wieder für eine ausgewählte einzigartige Zeitdauer abgetastet werden;

einer zweiten Speichereinrichtung (25), die im Betrieb mit der potentiell verwendbaren Auswähleinrichtung (30) zum Speichern der Vielzahl von potentiell verwendbaren Mustermerkmalsdaten und Referenzmerkmalsdaten gekoppelt ist;

einer ähnlichkeitsberechnenden Einrichtung (26), die im Betrieb mit der zweiten Speichereinrichtung (25) zum Berechnen von Ähnlichkeiten zwischen den potentiell verwendbaren Mustermerkmalsdaten und der Referenzmusterdaten gekoppelt ist, und

eine bestimmende Einrichtung, die im Betrieb mit der ähnlichkeitsberechnenden Einrichtung (26) zum Bestimmen der Muster des Eingangssignals, welches auf der berechneten Ähnlichkeit basiert, gekoppelt ist.

**9.** Anordnung nach Anspruch 8, dadurch gekennzeichnet, daß:

das Eingangssignal Frequenzspektrumsdaten und Energiepegeldaten beinhaltet;

die extrahierende Einrichtung (21) eine erste Filtereinrichtung (21A) zum Extrahieren der Frequenzspektrumsdaten und eine zweite Filtereinrichtung (21A) zum Extrahieren der Energiepegeldaten beinhaltet;

die erste Speichereinrichtung (23) die Frequenzspektrumsdaten speichert; und

die potentiell verwendbare Auswähleinrichtung eine Einrichtung zum Bestimmen der Zeitdauern für die potentiell verwendbaren Mustermerkmalsdaten entsprechend den Energiepegeldaten beinhaltet.

**10.** Anordnung nach Anspruch 9, dadurch gekennzeichnet, daß:

das Eingangssignal ein Sprachsignal umfaßt, welches ein Sprachmuster besitzt;

die Referenzmusterdaten eine Vielzahl von Referenzsprachmustern repräsentieren; und

die bestimmende Einrichtung eine Einrichtung zum Anpassen der Sprachmuster an ein bestimmtes ausgewähltes Referenzsprachmuster beinhaltet, welches auf der berechneten Ähnlichkeit basiert.

**11.** Anordnung nach Anspruch 8, dadurch gekennzeichnet, daß die extrahierende Einrichtung (21) beinhaltet:

eine Filterbank (21A), welche eine Vielzahl von Frequenzkanälen zum Filtern beinhaltet und welche das Eingangssignal in einem vorbestimmten Rahmenzyklus abtastet, um ein gefilteres Eingangssignal zu erzeugen; und

eine Analog/Digital-Umsetzer-Einrichtung (21B), die im Betrieb mit der Filterbank (21A) zum Digitalisieren des gefilterten Eingangssignals gekoppelt ist, um Rahmendaten zu bilden.

**12.** Anordnung nach Anspruch 8, dadurch gekennzeichnet, daß die erste Speichereinrichtung (23) eine Ringstruktur besitzt.

**13.** Anordnung nach Anspruch 8, dadurch gekennzeichnet, daß:

die zweite Speichereinrichtung (25) eine Vielzahl von Speichereinheiten (25A, 25B) beinhaltet, wobei jede der Speichereinheiten (25A, 25B) ausgewählte Rahmendaten der potentiell verwendbaren Mustermerkmalsdaten speichert; und

die ähnlichkeitsberechnende Einrichtung (26) eine Vielzahl von ähnlichkeitsberechnende Abschnitte (26A, 26B) beinhaltet, die im Betrieb mit den jeweiligen und entsprechenden Speichereinheiten (25a, 25B) gekoppelt sind, wobei jeder der ähnlichkeitsberechnenden Abschnitte (26A, 26B) eine Ähnlichkeit zwischen den Rahmendaten der potentiell verwendbaren Mustermerkmalsdaten einer entsprechenden Speichereinheit und den Referenzmusterdaten berechnet.

**14.** Anordnung nach Anspruch 13, dadurch gekennzeichnet, daß die zweite Speichereinrichtung (25) eine Vielzahl von Referenzmusterspeichern (27A, 27B) beinhaltet, die im Betrieb mit den jeweiligen und entsprechenden ähnlichkeitsberechnenden Abschnitten (26A, 26B) gekoppelt sind, wobei jeder der ähnlichkeitsberechnenden Abschnitte (26A, 26B) eine Ähnlichkeit zwischen den Rahmendaten der potentiell verwendbaren Merkmalsdaten einer entsprechenden Speichereinheit (25A, 25B) und den Referenzmusterdaten eines entsprechenden Referenzmusterspeichers berechnet.

**15.** Anordnung nach Anspruch 13, dadurch gekennzeichnet, daß die zweite Speichereinrichtung (25) ferner einen einzelnen Referenzmusterspeicher (27) beinhaltet, der im Betrieb mit den Speichereinheiten zum Speichern der Referenzmusterdaten und zum Mitteilen der Referenzmusterdaten an die Speichereinheiten beinhaltet.

## Revendications

**1.** Appareil de reconnaissance de motif comprenant :

un moyen (21) pour extraire des données de caractéristique de motif représentant une caractéristique de motif d'un signal d'entrée incluant des durées indiquant des périodes de signal efficace ;

un premier moyen de mémoire (23) pour stocker les données de caractéristique de motif extraites ;

un moyen (24, 30) pour ré-échantillonner des données de caractéristique de motif défini incluses dans les données de caractéristique de motif stockées dans ledit premier moyen de mémoire (23), ledit moyen de ré-échantillonnage (24, 30) incluant un moyen pour définir une pluralité de durées indiquant une pluralité de différentes périodes de signal efficace des données de caractéristique de motif stockées dans ledit premier moyen de mémoire (23) ;

un second moyen de mémoire (25) comportant une pluralité d'unités de mémoire (25A, 25B) pour stocker les données de caractéristique de motif défini lues par ledit moyen de ré-échantillonnage (24, 30) ;

un moyen (27) pour stocker des données de motif de référence ;

un moyen de calcul de similarité (26) incluant des sections de calcul de similarité (26A, 26B) correspondant en nombre à ladite pluralité d'unités de mémoire (25A, 25B), chacune desdites sections de calcul calculant des similarités entre les données de caractéristique de motif défini lues dans ledit second moyen de mémoire (25) et lesdites données de motif de référence lues dans ledit moyen de stockage de données de motif de référence ; et

un moyen (28) pour déterminer la caractéristique de motif du signal d'entrée sur la base des similarités calculées.

**2.** Appareil selon la revendication 1 caractérisé en ce que :

ledit moyen d'extraction de données de caractéristique de motif (21) inclut un premier moyen de filtre (21A) pour extraire des données de spectre de fréquence du signal d'entrée et un second moyen de filtre (21A) pour extraire des données de niveau d'énergie du signal d'entrée ;

ledit premier moyen de mémoire (23) stocke les données de spectre de fréquence en provenance dudit premier moyen de filtre (21A) ; et

ledit moyen de ré-échantillonnage (24, 30) inclut un moyen pour déterminer les différentes périodes de signal efficace conformément aux données de niveau d'énergie en provenance dudit second moyen de filtre (21A).

**3.** Appareil selon la revendication 2, caractérisé en ce que :

le signal d'entrée est un signal vocal ;

les données de motif de référence représentent une pluralité de motifs vocaux de référence ; et

ledit moyen de détermination de motif inclut un moyen pour déterminer le signal vocal d'entrée sur la base des similarités calculées.

**4.** Appareil selon la revendication 1, caractérisé en ce que ledit moyen d'extraction de données de caractéristique de motif (21) inclut :

une batterie de filtres (21A) pour filtrer, en utilisant une pluralité de canaux de fréquence, ledit signal d'entrée échantillonné obtenu en échantillonnant le signal d'entrée selon le cycle de cadre prédéterminé ; et

un moyen (21B) pour convertir de la forme analogique à la forme numérique la sortie en provenance de ladite batterie de filtres (21A) et pour former des données de cadre.

5. Appareil selon la revendication 1, caractérisé en ce que le premier moyen de mémoire (23) présente une structure en anneau.

6. Appareil selon la revendication 1, caractérisé en ce que les données de motif de référence sont émises en sortie depuis une pluralité de mémoires de motifs de référence (27A, 27B) prévues en correspondance avec ladite pluralité de sections de calcul de similarité (26A, 26B).

7. Appareil selon la revendication 1, caractérisé en ce que les données de motif de référence sont émises en sortie depuis une unique mémoire de motifs de référence (27) de façon commune pour ladite pluralité d'unités de mémoire.

8. Appareil de reconnaissance de motif pour déterminer un motif d'un signal d'entrée, ledit appareil comprenant :

un moyen d'extraction (21) pour extraire des données de caractéristique de motif représentatives du motif à partir du signal d'entrée ;

un premier moyen de mémoire (23) couplé de façon opérationnelle au moyen d'extraction (21) pour stocker les données de caractéristique de motif extraites ;

un moyen de sélection de candidat (30) couplé de façon opérationnelle au premier moyen de mémoire (23) pour sélectionner une pluralité de données de caractéristique de motif candidates correspondant à une pluralité de durées des données de caractéristique de motif extraites, chacune des données de caractéristique de motif candidate étant ré-échantillonnée de manière à présenter une unique durée sélectionnée ;

un second moyen de mémoire (25) couplé de façon opérationnelle au moyen de sélection de candidat (30) pour stocker la pluralité de données de caractéristique de motif candidates et de données de motif de référence ;

un moyen de calcul de similarité (26) coupé de façon opérationnelle au second moyen de mémoire (25) pour calculer les similarités entre les données de caractéristique de motif candidates et les données de motif de référence ; et

un moyen de détermination couplé de façon opérationnelle au moyen de calcul de similarité (26) pour déterminer le motif du signal d'entrée sur la base de la similarité calculée.

9. Appareil selon la revendication 8, caractérisé en ce que :

le signal d'entrée inclut des données de spectre de fréquence et des données de niveau d'énergie ;

ledit moyen d'extraction (21) inclut un premier moyen de filtre (21A) pour extraire les données de spectre de fréquence et un second moyen de filtre (21A) pour extraire les données de niveau d'énergie ;

ledit premier moyen de mémoire (23) stocke les données de spectre de fréquence ; et

ledit moyen de sélection de candidat inclut un moyen pour déterminer les durées pour les données de caractéristique de motif candidates en relation avec les données de niveau d'énergie.

10. Appareil selon la revendication 9, caractérisé en ce que :

le signal d'entrée comprend un signal vocal comportant un motif vocal ;

les données de motif de référence représentent une pluralité de motifs vocaux de référence ; et

ledit moyen de détermination inclut un moyen pour faire correspondre le motif vocal à l'un sélectionné des motifs vocaux de référence sur la base de la similarité calculée.

11. Appareil selon la revendication 8, caractérisé en ce que ledit moyen d'extraction (21) inclut :

une batterie de filtres (21A) incluant une pluralité de canaux de fréquence pour filtrer et échantillonner le signal d'entrée lors d'un cycle de cadre prédéterminé afin de générer un signal d'entrée filtré ; et

un moyen de conversion de la forme analogique à la forme numérique (21B) couplé de façon opérationnelle à la batterie de filtres (21A) pour numériser le signal d'entrée filtré afin de former des données de cadre.

12. Appareil selon la revendication 8, caractérisé en ce que ledit premier moyen de mémoire (23) comporte une structure en anneau.

13. Appareil selon la revendication 8, caractérisé en ce que :

ledit second moyen de mémoire (25) inclut une pluralité d'unités de mémoire (25A, 25B), chacune des unités de mémoire (25A, 25B) stockant des données de cadre sélectionnées des données de caractéristique de motif candidates ; et

ledit moyen de calcul de similarité (26) inclut une pluralité de sections de calcul de similarité (26A, 26B) couplées de façon opérationnelle à certaines respectives et correspondantes desdites unités de mémoire (25A, 25B), chacune desdites sections de calcul de similarité (26A, 26B) calculant une similarité entre les données de cadre des données de caractéristique de motif candidates d'une unité de mémoire correspondante et les données de motif de référence.

**14.** Appareil selon la revendication 13, caractérisé en ce que le second moyen de mémoire (25) inclut une pluralité de mémoires de motifs de référence (27A, 27B) couplées de façon opérationnelle à certaines respectives et correspondantes desdites sections de calcul de similarité (26A, 26B), chacune desdites sections de calcul de similarité (26A, 26B) calculant une similarité entre les données de cadre des données de caractéristique candidates d'une unité de mémoire correspondante (25A, 25B) et les données de motif de référence d'une mémoire de motifs de référence correspondante.

**15.** Appareil selon la revendication 13, caractérisé en ce que ledit second moyen de mémoire (25) inclut en outre une unique mémoire de motifs de référence (27) couplée de façon opérationnelle auxdites unités de mémoire pour stocker les données de motif de référence et pour communiquer les données de motif de référence aux unités de mémoire.

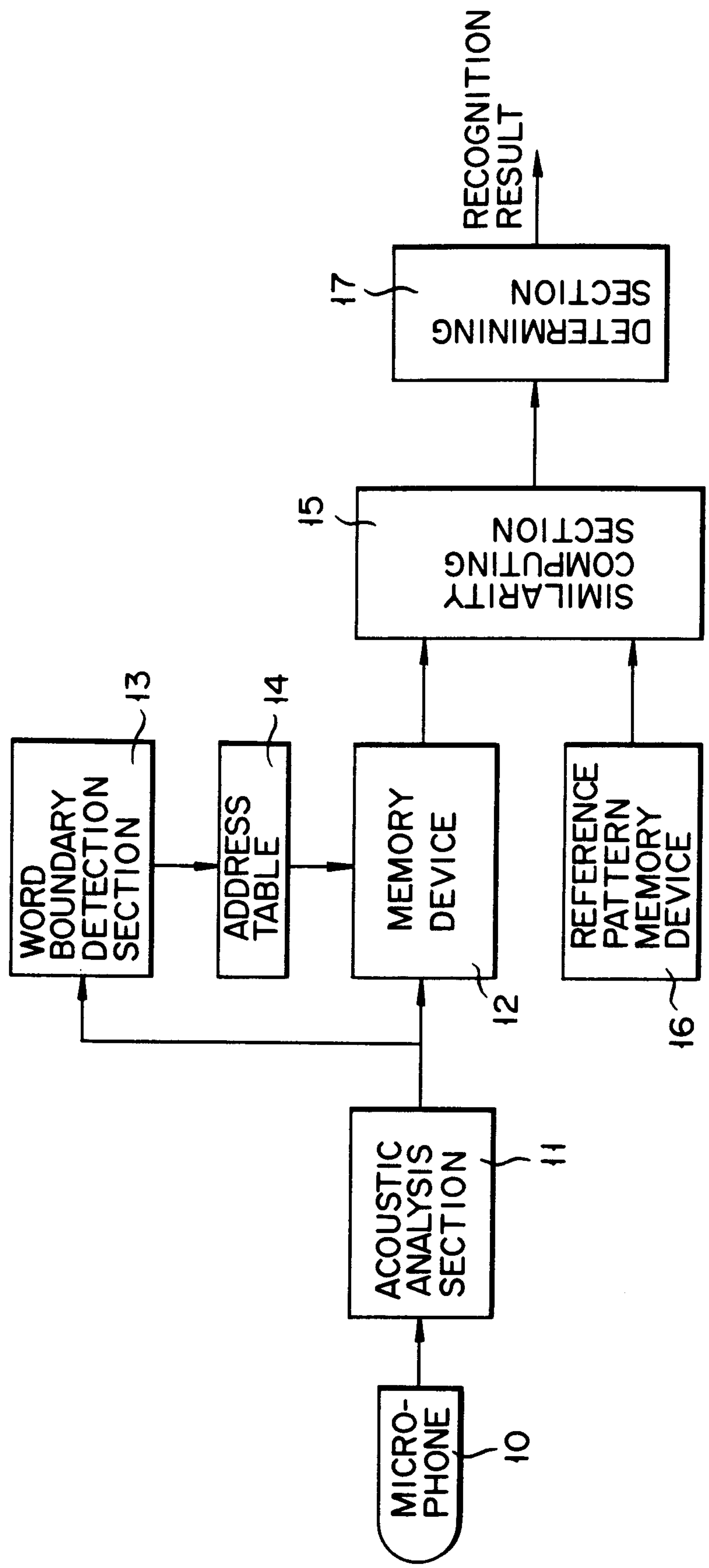
MICRO-PHONE
10
ACOUSTIC ANALYSIS SECTION
11
MEMORY DEVICE
12
WORD BOUNDARY DETECTION SECTION
13
ADDRESS TABLE
14
SIMILARITY COMPUTING SECTION
15
REFERENCE PATTERN MEMORY DEVICE
16
DETERMINING SECTION
17
RECOGNITION RESULT

FIG. 1

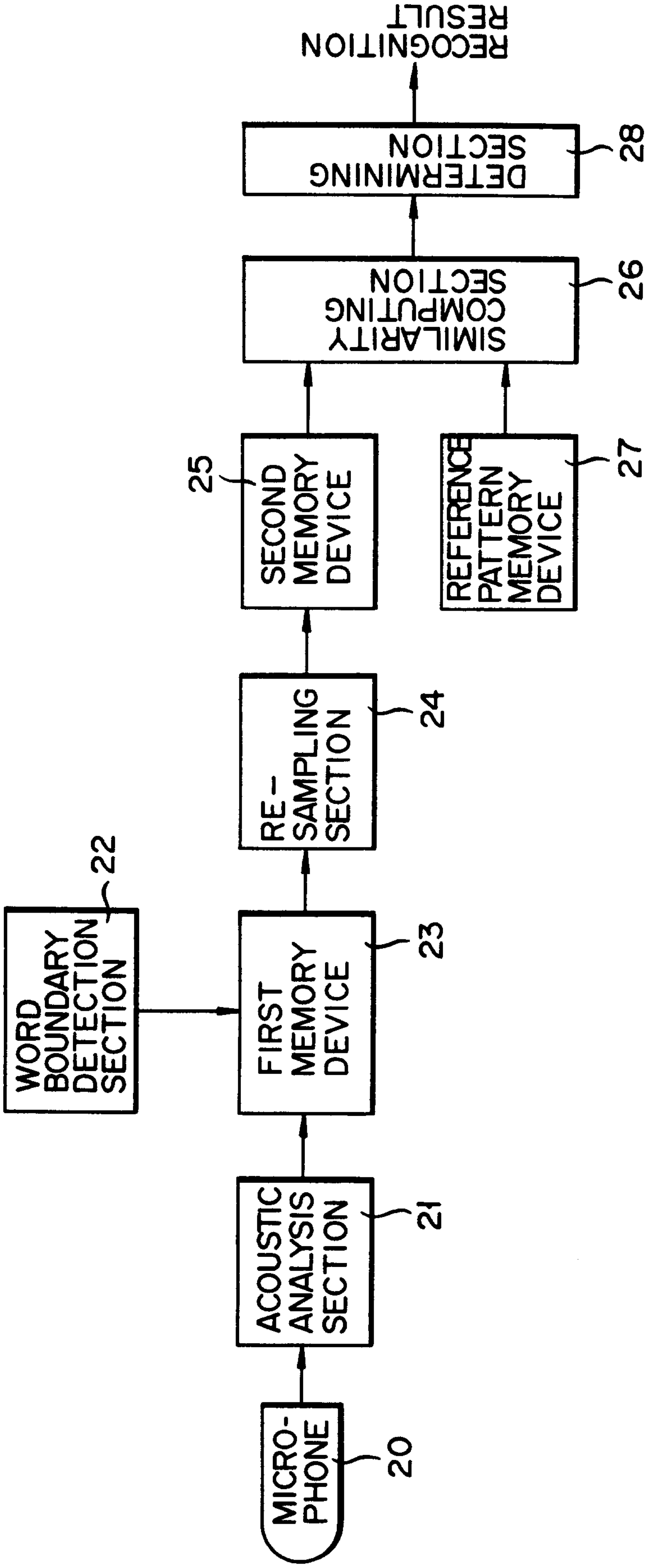
MICRO-PHONE
20
ACOUSTIC ANALYSIS SECTION
21
FIRST MEMORY DEVICE
23
WORD BOUNDARY DETECTION SECTION
22
RE-SAMPLING SECTION
24
SECOND MEMORY DEVICE
25
REFERENCE PATTERN MEMORY DEVICE
27
SIMILARITY COMPUTING SECTION
26
DETERMINING SECTION
28
RECOGNITION RESULT

F I G. 2

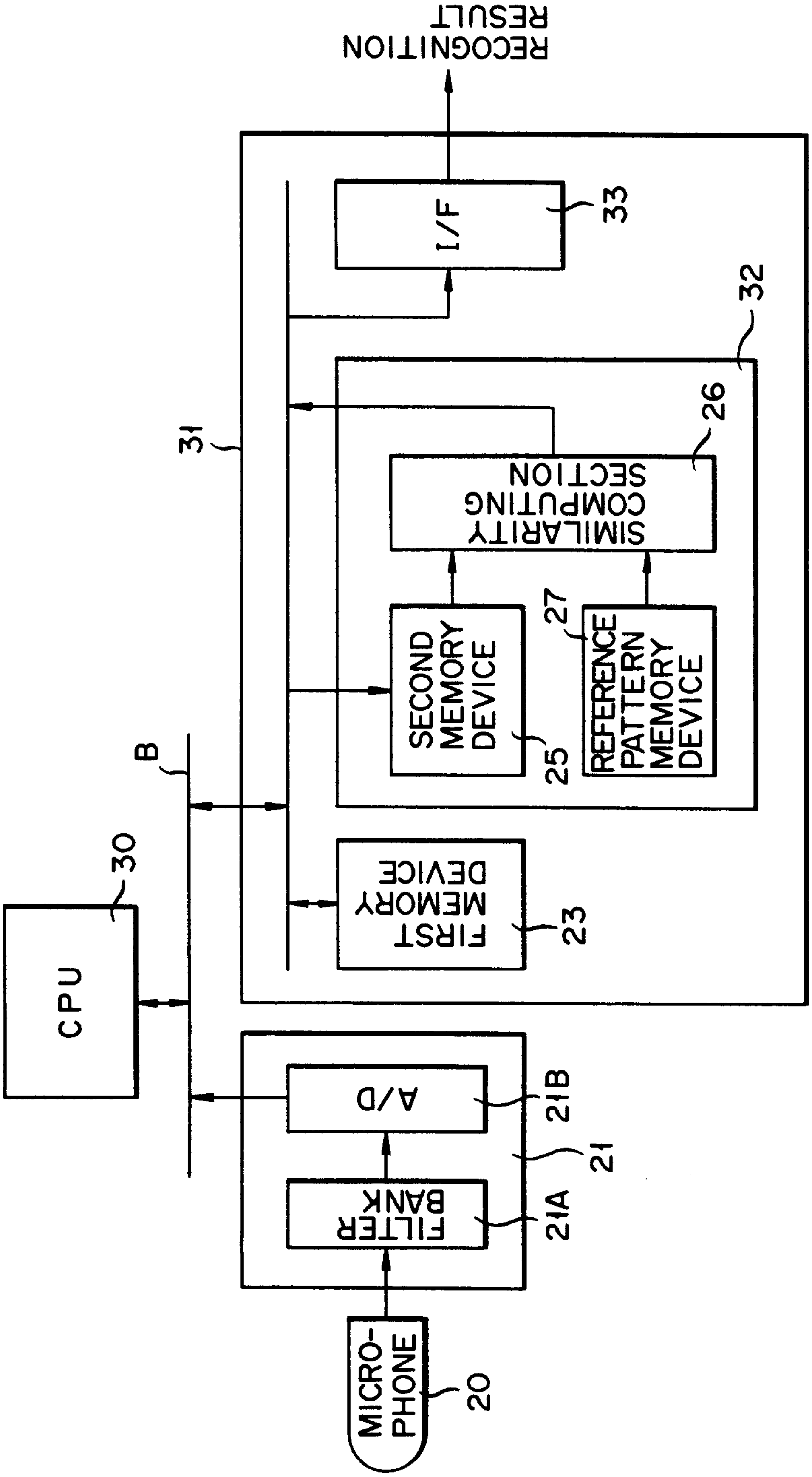
RECOGNITION RESULT
I/F
33
32
31
26
SIMILARITY COMPUTING SECTION
27
SECOND MEMORY DEVICE
25
REFERENCE PATTERN MEMORY DEVICE
B
30
CPU
FIRST MEMORY DEVICE
23
A/D
21B
21
FILTER BANK
21A
MICRO-PHONE
20

FIG. 3

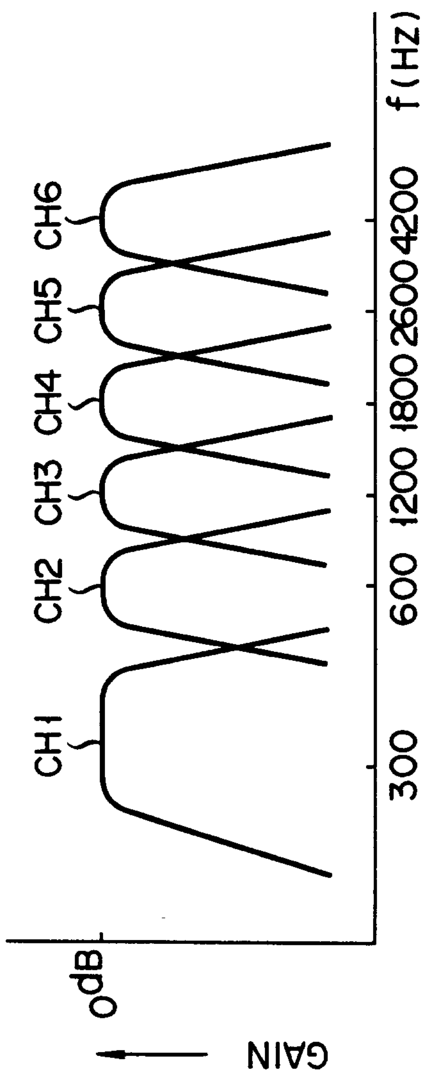
GAIN
0dB
CH1
CH2
CH3
CH4
CH5
CH6
300
600
1200
1800
2600
4200
f (Hz)
FREQUENCY

FIG. 4

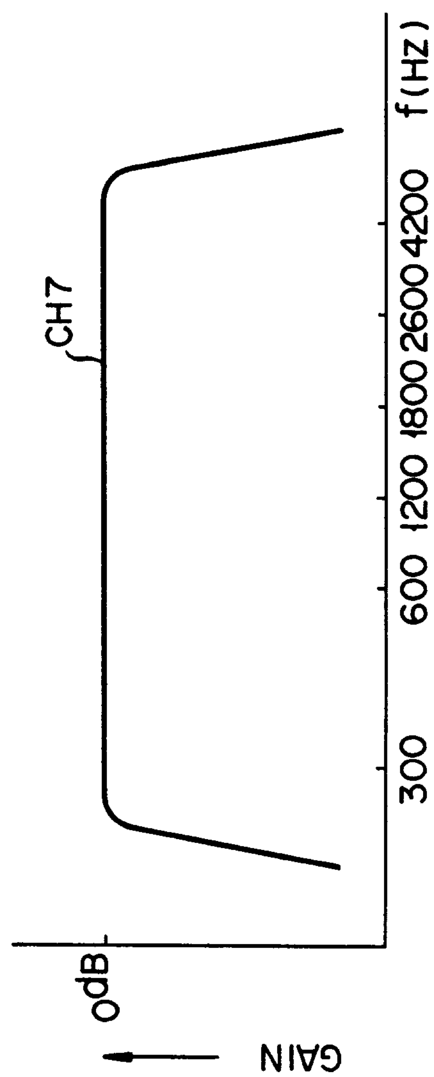
GAIN
0dB
CH7
300
600
1200
1800
2600
4200
f (Hz)
FREQUENCY

FIG. 5

FIG. 6

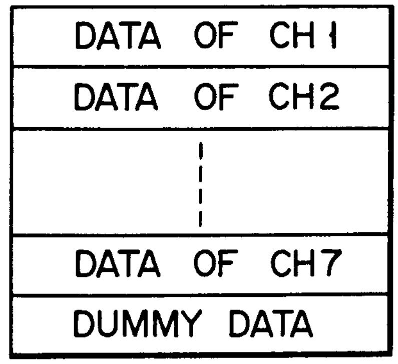


FIG. 7

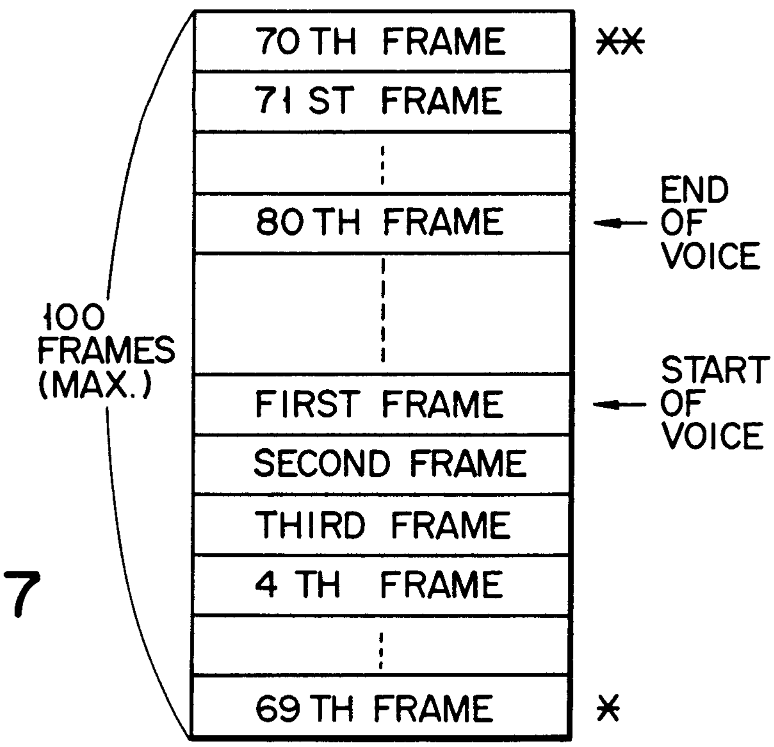


FIG. 8

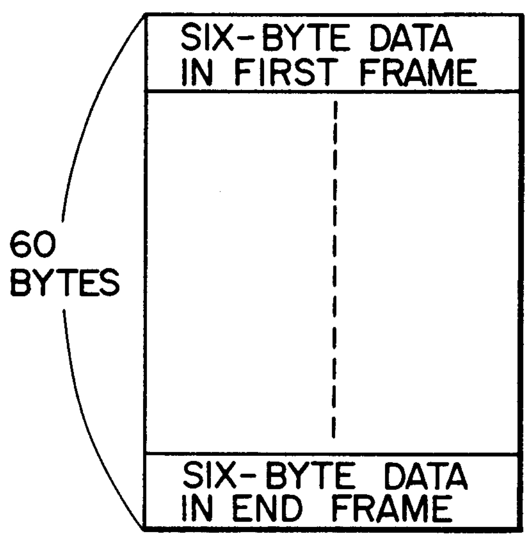

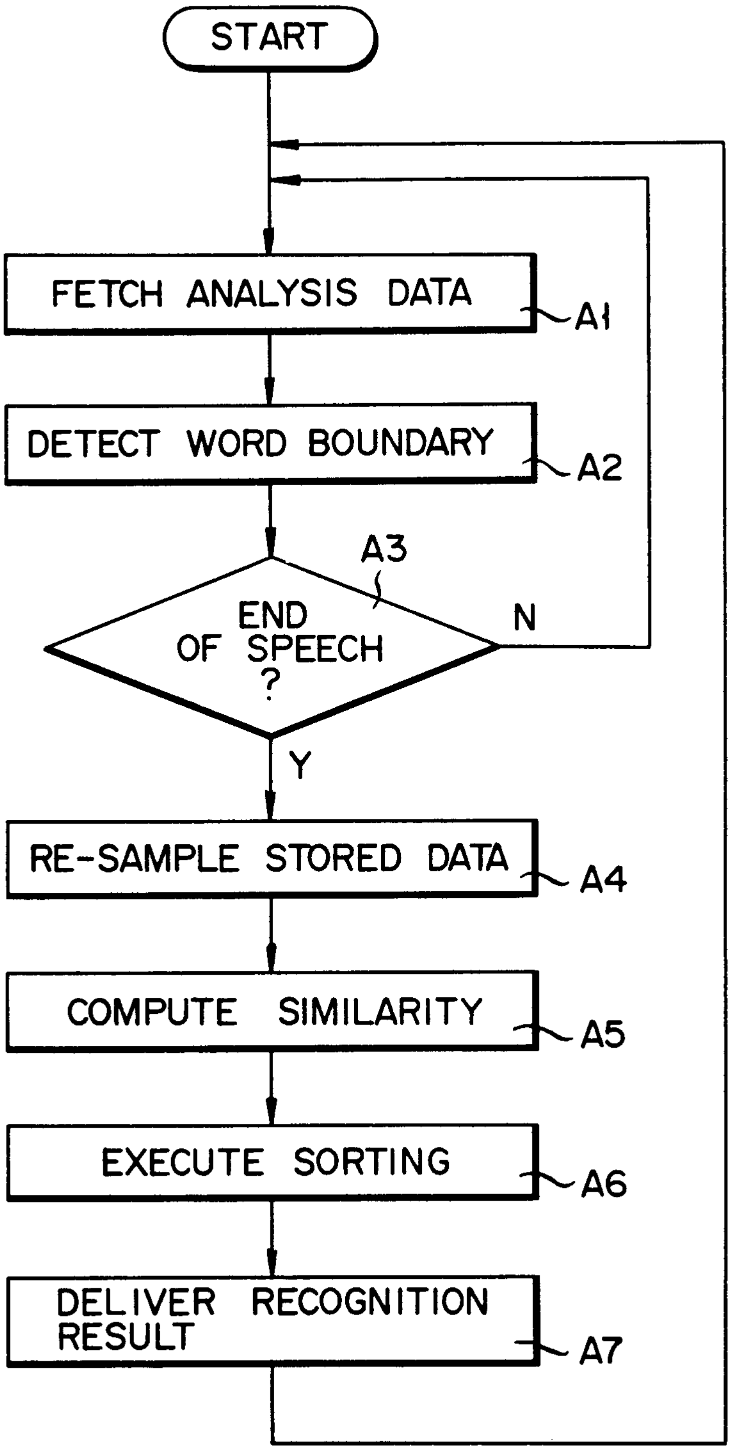
START
FETCH ANALYSIS DATA
A1
DETECT WORD BOUNDARY
A2
A3
END OF SPEECH ?
N
Y
RE-SAMPLE STORED DATA
A4
COMPUTE SIMILARITY
A5
EXECUTE SORTING
A6
DELIVER RECOGNITION RESULT
A7

FIG. 9

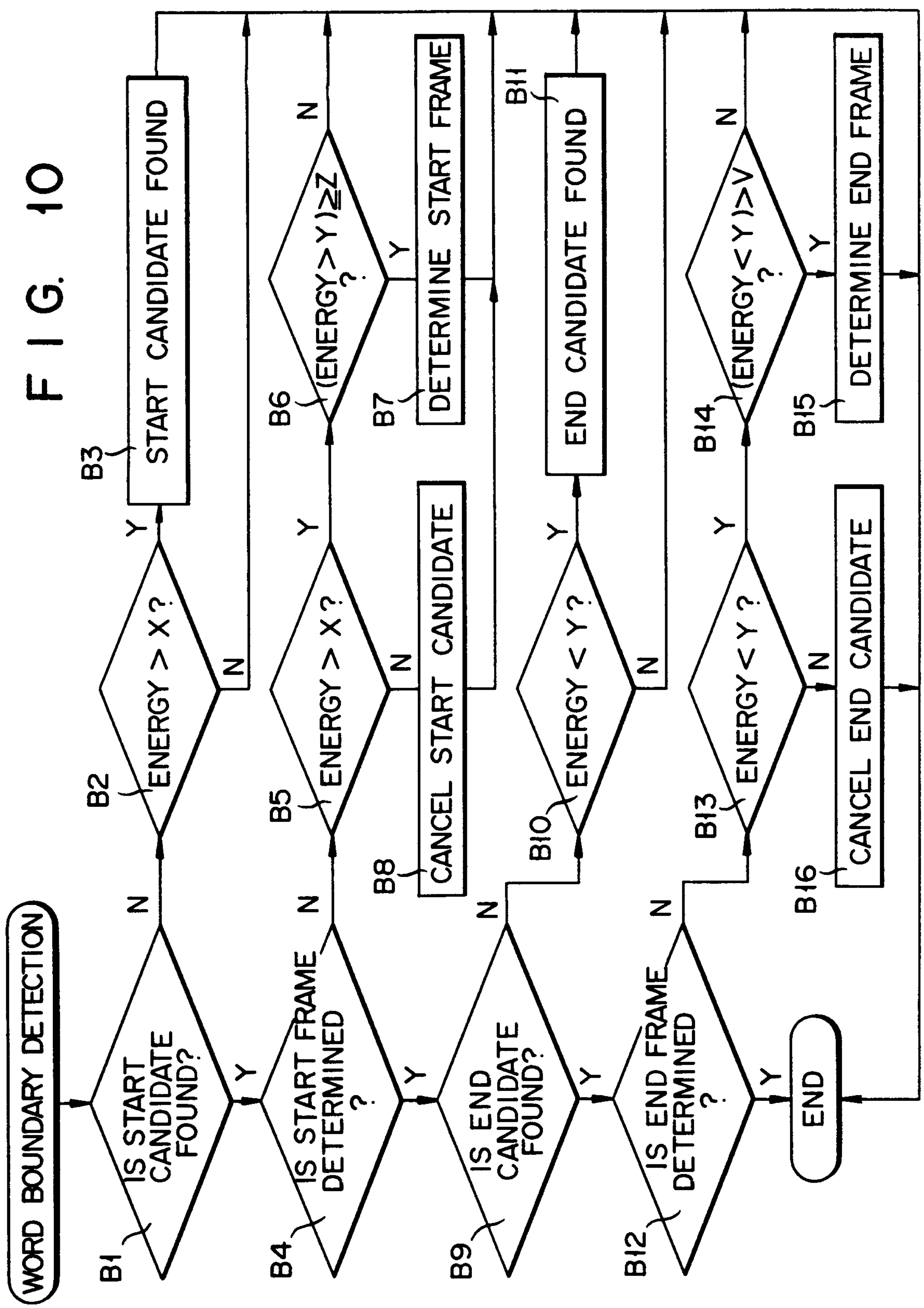
WORD BOUNDARY DETECTION
B1
IS START CANDIDATE FOUND?
Y
N
B2
ENERGY > X ?
Y
N
B3
START CANDIDATE FOUND
B4
IS START FRAME DETERMINED ?
Y
N
B5
ENERGY > X ?
Y
N
B6
(ENERGY > Y) ≧ Z ?
Y
N
B7
DETERMINE START FRAME
B8
CANCEL START CANDIDATE
B9
IS END CANDIDATE FOUND?
Y
N
B10
ENERGY < Y ?
Y
N
B11
END CANDIDATE FOUND
B12
IS END FRAME DETERMINED ?
Y
N
B13
ENERGY < Y ?
Y
N
B14
(ENERGY < Y) > V ?
Y
N
B15
DETERMINE END FRAME
B16
CANCEL END CANDIDATE
END

FIG. 10

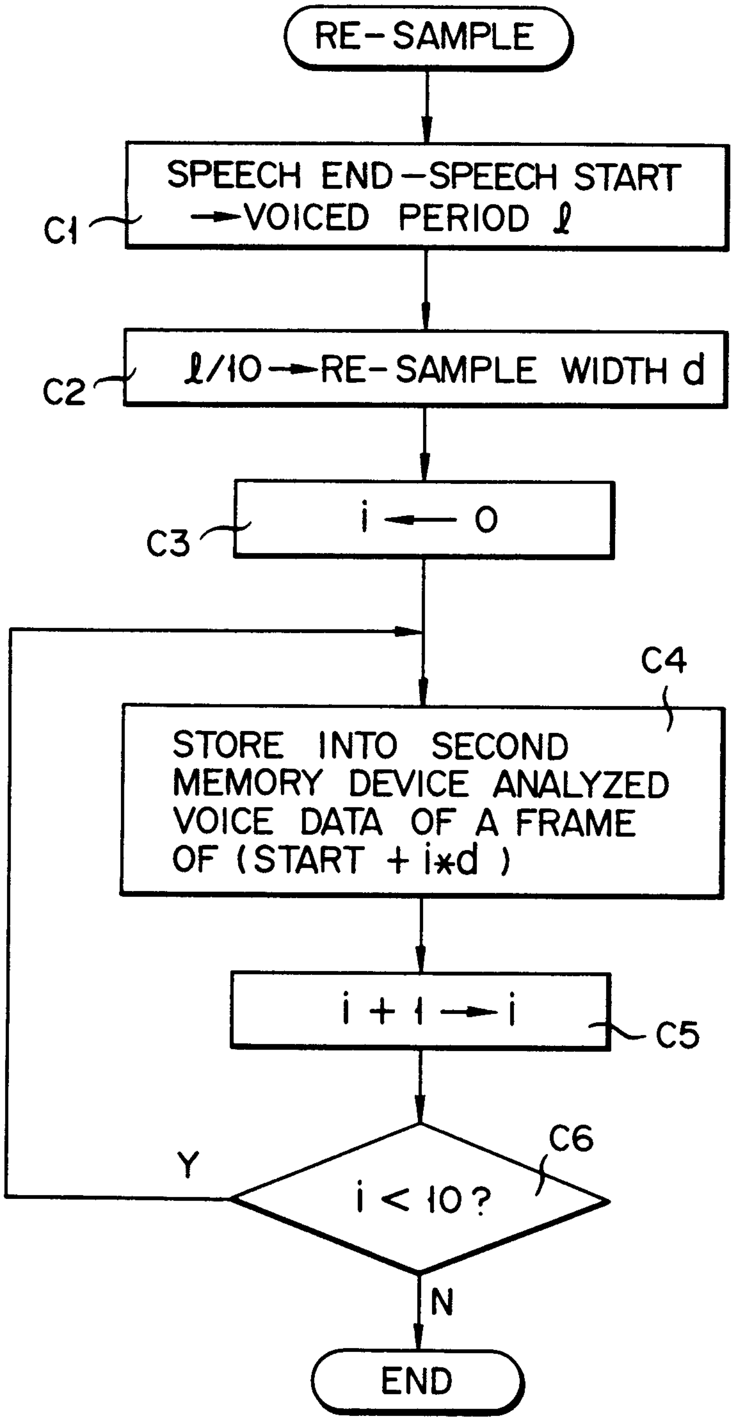
RE-SAMPLE
SPEECH END−SPEECH START
→VOICED PERIOD ℓ
C1
ℓ/10→RE-SAMPLE WIDTH d
C2
i ← 0
C3
C4
STORE INTO SECOND MEMORY DEVICE ANALYZED VOICE DATA OF A FRAME OF (START + i∗d)
i + 1 → i
C5
C6
Y
i < 10 ?
N
END

FIG. 11

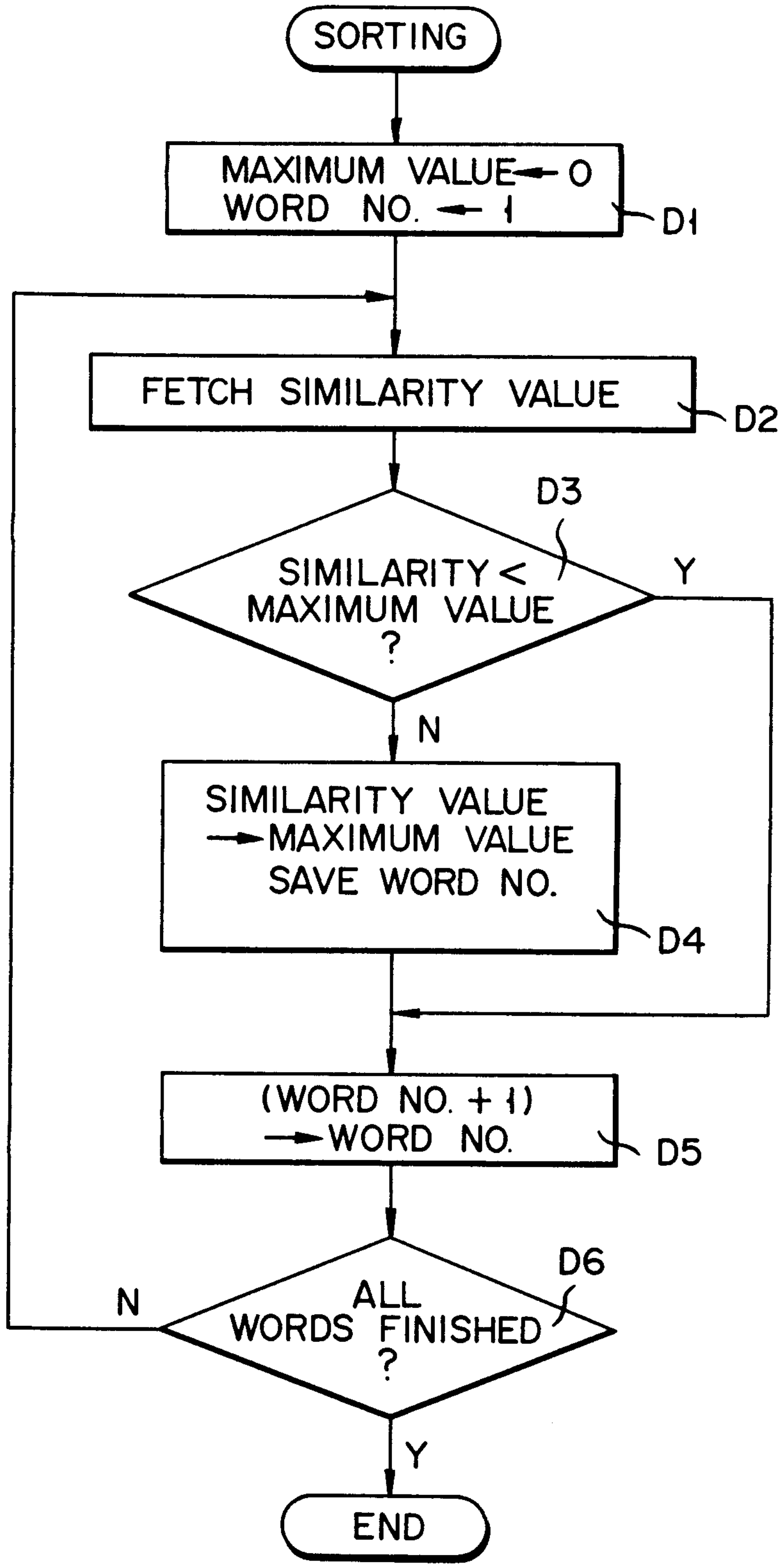
SORTING
MAXIMUM VALUE ← 0
WORD NO. ← 1
D1
FETCH SIMILARITY VALUE
D2
D3
SIMILARITY <
MAXIMUM VALUE
?
Y
N
SIMILARITY VALUE
→ MAXIMUM VALUE
SAVE WORD NO.
D4
(WORD NO. + 1)
→ WORD NO.
D5
D6
ALL
WORDS FINISHED
?
N
Y
END

FIG. 12

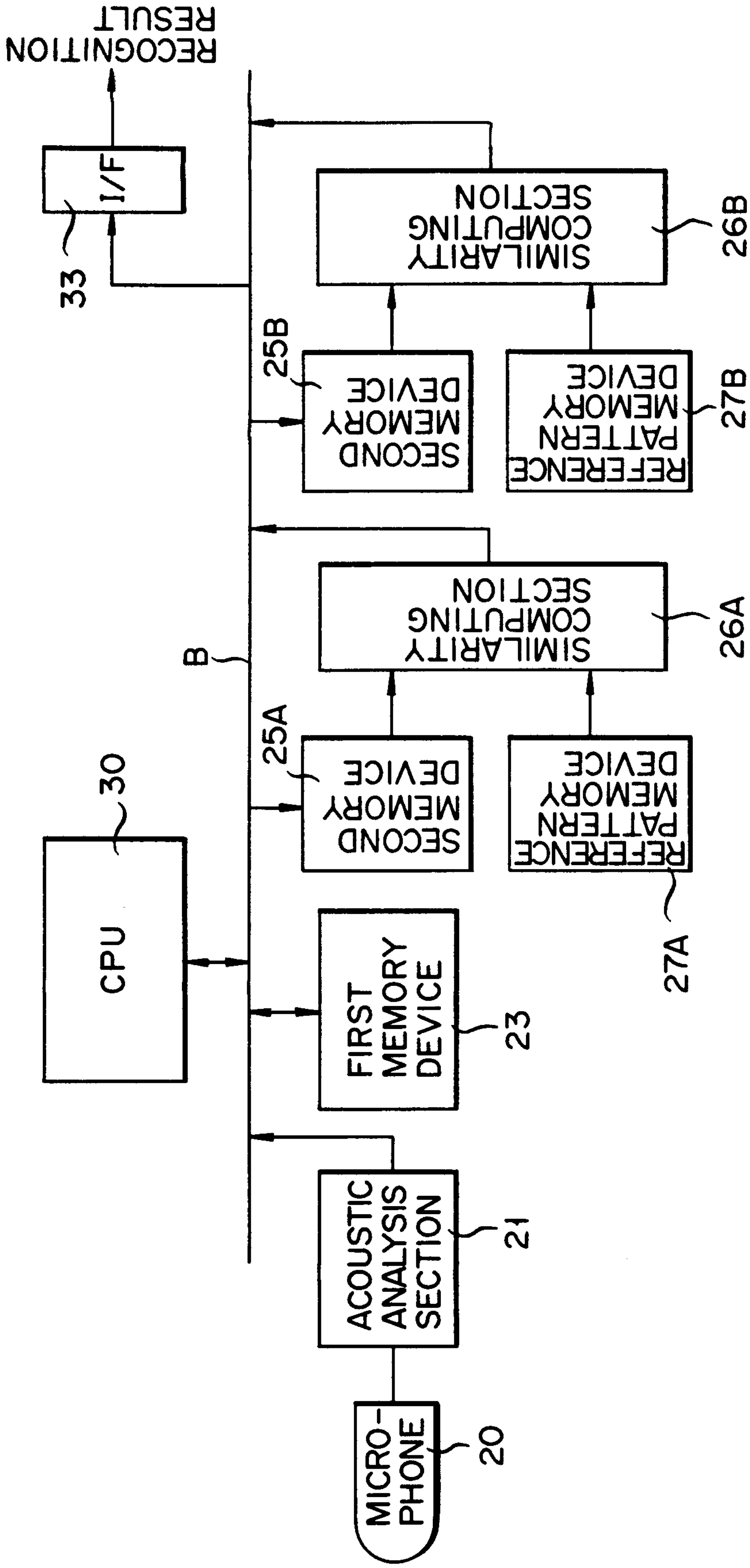
MICRO-PHONE
20
ACOUSTIC ANALYSIS SECTION
21
FIRST MEMORY DEVICE
23
CPU
30
B
SECOND MEMORY DEVICE
25A
REFERENCE PATTERN MEMORY DEVICE
27A
SIMILARITY COMPUTING SECTION
26A
SECOND MEMORY DEVICE
25B
REFERENCE PATTERN MEMORY DEVICE
27B
SIMILARITY COMPUTING SECTION
26B
I/F
33
RECOGNITION RESULT

FIG. 13

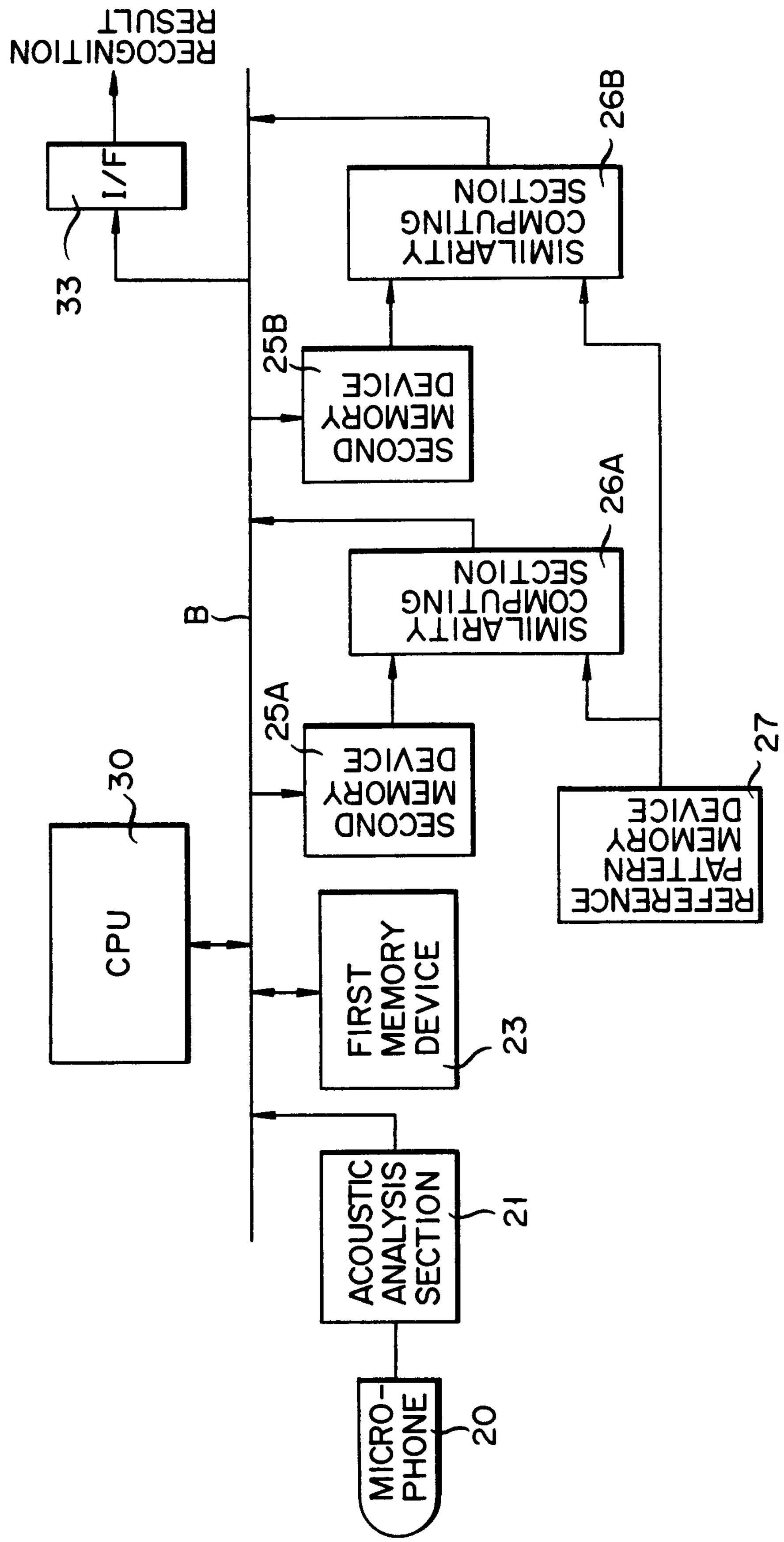
RECOGNITION RESULT
I/F
33
26B
SIMILARITY COMPUTING SECTION
25B
SECOND MEMORY DEVICE
26A
SIMILARITY COMPUTING SECTION
B
25A
SECOND MEMORY DEVICE
30
CPU
27
REFERENCE PATTERN MEMORY DEVICE
FIRST MEMORY DEVICE
23
ACOUSTIC ANALYSIS SECTION
21
MICRO-PHONE
20

FIG. 14